(19) Europäisches Patentamt
European Patent Office
Office européen des brevets

(11) EP 4 074 774 A2

(12) EUROPEAN PATENT APPLICATION

(43) Date of publication:
**19.10.2022 Bulletin 2022/42**

(21) Application number: **22162170.9**

(22) Date of filing: **15.03.2022**

(51) International Patent Classification (IPC):
***C08L 9/00*** (2006.01) ***B60C 1/00*** (2006.01)
***C08K 3/36*** (2006.01) ***C08K 5/548*** (2006.01)
***C08L 9/06*** (2006.01)

(52) Cooperative Patent Classification (CPC):
**C08L 9/00; B60C 1/00; B60C 1/0016; C08K 3/36; C08K 5/548; C08L 9/06**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.04.2021 JP 2021069096**

(71) Applicant: **Sumitomo Rubber Industries, Ltd.**
**Kobe-shi, Hyogo-ken 651-0072 (JP)**

(72) Inventor: **MATSUI, Tomoya**
**Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(54) **TIRE**

(57) Provided is a tire having excellent wet grip performance during high-speed running. Included is a tire including a tread having a layer of a rubber composition which contains one or more rubber components having a combined content of isoprene-based rubbers, polybutadiene rubbers, and styrene-butadiene rubbers having a styrene content of 30% by mass or lower and a vinyl content of 30% by mass or lower of 90% by mass or more, and silica, and which has a tan δ at 0°C of 0.50 or more, an acetone extractable content of 10.0% by mass or lower, and a density of 1.30 g/cm$^3$ or less, the tire having a maximum tread thickness of 10.0 mm or less and a tire outer diameter of 700 mm or less.

FIG.1

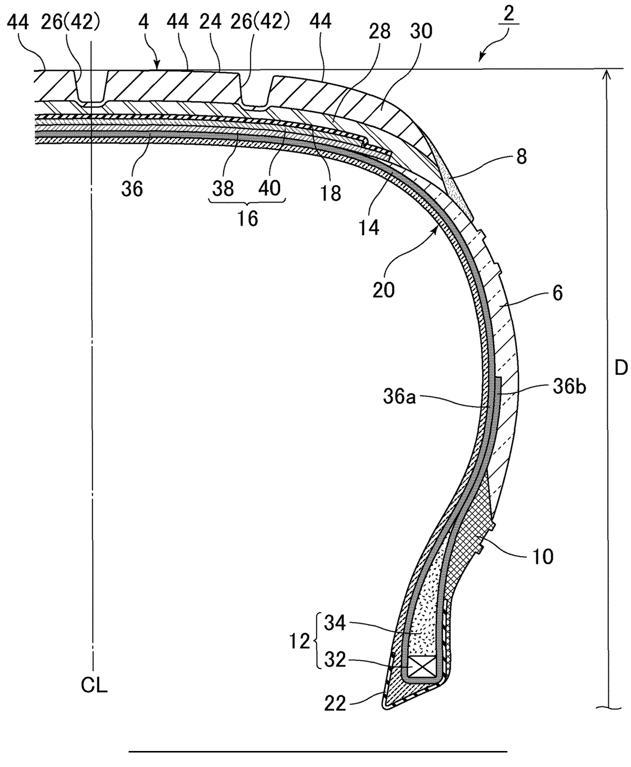




Processed by Luminess, 75001 PARIS (FR)

## Description

TECHNICAL FIELD

The present disclosure relates to tires.

BACKGROUND ART

Various methods have been proposed to improve wet grip performance of tires, such as by incorporating silica into a tread rubber composition, or increasing the amount of low-softening-point resins, liquid polymers, and the like, or incorporating cold-resistant plasticizers. However, in recent years it has become desirable to improve wet grip performance especially during high-speed running.

SUMMARY OF DISCLOSURE

TECHNICAL PROBLEM

The present disclosure aims to solve the above problem and provide a tire having excellent wet grip performance during high-speed running.

SOLUTION TO PROBLEM

The present disclosure relates to a tire, including a tread, the tread having a layer of a rubber composition containing: one or more rubber components having a combined content of isoprene-based rubbers, polybutadiene rubbers, and styrene-butadiene rubbers having a styrene content of 30% by mass or lower and a vinyl content of 30% by mass or lower of 90% by mass or more; and silica, the layer having a tan δ at 0°C of 0.50 or more, an acetone extractable content of 10.0% by mass or lower, and a density of 1.30 g/cm$^3$ or less, the tire having a maximum tread thickness of 10.0 mm or less and a tire outer diameter of 700 mm or less.

ADVANTAGEOUS EFFECTS OF DISCLOSURE

The tire of the present disclosure includes a tread having a layer of a rubber composition which contains one or more rubber components having a combined content of isoprene-based rubbers, polybutadiene rubbers, and styrene-butadiene rubbers having a styrene content of 30% by mass or lower and a vinyl content of 30% by mass or lower of 90% by mass or more, and silica, and which has a tan δ at 0°C of 0.50 or more, an acetone extractable content of 10.0% by mass or lower, and a density of 1.30 g/cm$^3$ or less. Further, the tire has a maximum tread thickness of 10.0 mm or less and a tire outer diameter of 700 mm or less. Thus, the present disclosure provides a pneumatic tire having excellent wet grip performance during high-speed running.

BRIEF DESCRIPTION OF DRAWINGS

Fig. 1 is a cross-sectional view of a part of a pneumatic tire.
Fig. 2 is an enlarged cross-sectional view in the vicinity of a tread 4 of the tire 2 in Fig. 1.
Fig. 3 is a diagram showing a synthesis path of an end-capped silane-containing resin by phenol functionalization.

DESCRIPTION OF EMBODIMENTS

The present disclosure relates to a tire including a tread having a layer of a rubber composition which contains one or more rubber components having a predetermined combined content of isoprene-based rubbers, polybutadiene rubbers (BR), and styrene-butadiene rubbers (SBR) having a low styrene content and a low vinyl content, and silica, and which has a predetermined tan δ at 0°C, a predetermined acetone extractable content, and a predetermined density. Further, the tire has a predetermined maximum tread thickness and a predetermined tire outer diameter. Such a tire has excellent wet grip performance during high-speed running.
The reason for such an advantageous effect is not clear but is believed to be as follows.
Although it has been proposed to use silica in order to reduce heat build-up, the silica, which is hydrophilic, repels the acetone extractable components such as plasticizers which then escape from the tread surface during running,

thereby hardening the rubber surface. Thus, it is considered that wet grip performance may be reduced and that especially during high-speed running where the centrifugal force is also increased, bleeding of the plasticizers more significantly occurs, thereby reducing wet grip performance. To overcome this problem, an isoprene-based rubber, BR, and SBR having a low styrene content and a low vinyl content, each of which has a low glass transition temperature (Tg), may be used as main rubber components to reduce the glass transition temperature of the rubber matrix so that the rubber can be soft and provide more grip even when the input is at a high frequency (high speed). It is also considered that when these three components are used, the polymer phases are incompatible or partially compatible at the interfaces therebetween and therefore many interfaces are formed, which particularly inhibit the movement of the acetone extractable components. It is also considered that adjusting the tan δ at 0°C to a predetermined value or higher provides good wet grip performance, and at the same time reducing the acetone extractable content to a predetermined value or lower inhibits bleeding of the plasticizers so that a decrease in wet grip performance especially during high-speed running can be prevented. Moreover, it is considered that by reducing the maximum tread thickness, the density, and the tire outer diameter, the centrifugal force can be prevented from increasing during running, and at the same time the ground-contact shape is less likely to be unstable, resulting in less decrease in wet grip performance during high-speed running. Accordingly, it is believed that the tire provides excellent wet grip performance during high-speed running.

As described above, the disclosure solves the problem (purpose) of providing excellent wet grip performance during high-speed running by formulating a tire including a tread having a layer of a rubber composition containing one or more rubber components having a predetermined combined content of isoprene-based rubbers, BR, and SBR having a low styrene content and a low vinyl content, and silica to satisfy "a tan δ at 0°C of 0.50 or more, an acetone extractable content of 10.0% by mass or lower, and a density of 1.30 g/cm$^3$ or less", "a maximum tread thickness of 10.0 mm or less", and "a tire outer diameter of 700 mm or less". In other words, the parameters of "a tan δ at 0°C of 0.50 or more, an acetone extractable content of 10.0% by mass or lower, and a density of 1.30 g/cm$^3$ or less", "a maximum tread thickness of 10.0 mm or less", and "a tire outer diameter of 700 mm or less" do not define the problem (purpose), and the problem herein is to provide excellent wet grip performance during high-speed running. In order to solve this problem, the tire has been formulated to satisfy the parameters.

The present disclosure is described in detail below based on, but not limited to, an exemplary preferred embodiment with appropriate reference to the drawings.

Fig. 1 shows a pneumatic tire 2. In Fig. 1, the vertical direction corresponds to the radial direction of the tire 2, the horizontal direction corresponds to the axial direction of the tire 2, and the direction perpendicular to the paper corresponds to the circumferential direction of the tire 2. In Fig. 1, the dash-dot-dash line CL represents the equatorial plane of the tire 2. The shape of the tire 2 is symmetrical to the equatorial plane, except for the tread pattern.

The tire 2 includes a tread 4, a pair of sidewalls 6, a pair of wings 8, a pair of clinches 10, a pair of beads 12, a carcass 14, a belt 16, a band 18, an innerliner 20, and a pair of chafers 22. The tire 2 is a tubeless tire. The tire 2 will be mounted on a passenger vehicle.

The tread 4 has a radially outwardly convex shape. The tread 4 forms a tread surface 24 that will contact a road. The tread 4 has grooves 26 engraved thereon. The grooves 26 define a tread pattern. The tread 4 has a base layer 28 and a cap layer 30. The cap layer 30 is located radially outward of the base layer 28. The cap layer 30 is stacked on the base layer 28.

Although Fig. 1 illustrates an example of a two-layer tread 4 including a cap layer 30 and a base layer 28, the tread 4 may be a monolayer tread 4 or a three or more layer tread 4.

At least one rubber layer (vulcanized rubber composition layer) of the tread 4 contains one or more rubber components having a combined content of isoprene-based rubbers, polybutadiene rubbers, and styrene-butadiene rubbers having a styrene content of 30% by mass or lower and a vinyl content of 30% by mass or lower of 90% by mass or more, and silica, and further has a tan δ at 0°C of 0.50 or more, an acetone extractable content of 10.0% by mass or lower, and a density of 1.30 g/cm$^3$ or less. Desirably, the monolayer tread (when the tread is a monolayer tread), the cap layer of the two-layer tread (when the tread is a two-layer tread), or the cap layer (outermost layer) of the three or more layer tread (when the tread is a three or more layer tread) has a tan δ at 0°C of 0.50 or more, an acetone extractable content of 10.0% by mass or lower, and a density of 1.30 g/cm$^3$ or less.

The at least one rubber layer preferably has a tan δ at 0°C (after vulcanization) of 0.60 or more, still more preferably 0.70 or more, particularly preferably 0.80 or more. The upper limit of the tan δ at 0°C is not limited but is preferably 1.50 or less, more preferably 1.30 or less. When the tan δ at 0°C is within the range indicated above, the advantageous effect tends to be better achieved.

The tan δ at 0°C refers to the loss tangent measured under conditions including a temperature of 0°C, an initial strain of 5%, a dynamic strain of 1%, a frequency of 10 Hz, and an extension mode.

The tan δ at 0°C may be adjusted, for example, by varying the amount of fillers, SBR, or carbon black, or incorporating liquid resins or liquid polymers, or incorporating silica or aluminum hydroxide, or incorporating fillers having a small particle size, or reducing the particle size of fillers. Specifically, the tan δ at 0°C tends to be increased by increasing the amount of fillers, SBR, or carbon black, or incorporating liquid resins or liquid polymers, or incorporating silica or

aluminum hydroxide, or incorporating fillers having a small particle size.

The at least one rubber layer preferably has an acetone extractable content (AE, after vulcanization) of 9.8% by mass or lower, more preferably 9.6% by mass or lower, still more preferably 9.5% by mass or lower. The lower limit of the acetone extractable content is not limited but is preferably 5.0% by mass or higher, more preferably 6.0% by mass or higher, still more preferably 7.0% by mass or higher. When the acetone extractable content is within the range indicated above, the advantageous effect tends to be better achieved.

The acetone extractable content (AE) is measured by a method of measuring the acetone extractable content in accordance with JIS K 6229:2015.

The acetone extractable content may be adjusted, for example, by varying the amount of liquid plasticizers such as oils, antioxidants, or processing aids, or the proportion of other components in the rubber composition. Specifically, the acetone extractable content tends to be reduced by reducing the amount of liquid plasticizers, antioxidants, or processing aids, or increasing the amount of other components (e.g., fillers such as carbon black or silica).

The at least one rubber layer preferably has a density of 1.26 $g/cm^3$ or less, more preferably 1.24 $g/cm^3$ or less, still more preferably 1.22 $g/cm^3$ or less. The lower limit of the density is not limited but is preferably 1.00 $g/cm^3$ or more, more preferably 1.05 $g/cm^3$ or more, still more preferably 1.10 $g/cm^3$ or more. When the density is within the range indicated above, the advantageous effect tends to be better achieved.

The density is calculated from the mass measured in ethanol and the mass measured in air.

The density may be adjusted by, for example, the materials (e.g., rubber components, fillers) in the rubber composition. Specifically, the density tends to be reduced by using materials having a small specific gravity or increasing the amount of fillers.

At least one rubber layer of the tread 4 includes a tread rubber composition containing one or more rubber components and silica. Suitably, the monolayer tread (when the tread is a monolayer tread), the cap layer of the two-layer tread (when the tread is a two-layer tread), or the cap layer (outermost layer) of the three or more layer tread (when the tread is a three or more layer tread) includes the tread rubber composition.

Examples of the rubber components in the tread rubber composition include diene rubbers. Examples of the diene rubbers include isoprene-based rubbers, polybutadiene rubbers (BR), styrene-butadiene rubbers (SBR), styreneisoprene-butadiene rubbers (SIBR), ethylene-propylene-diene rubbers (EPDM), chloroprene rubbers (CR), and acrylonitrile-butadiene rubbers (NBR). Other examples include butyl-based rubbers and fluororubbers. These may be used alone or in combinations of two or more.

The diene rubbers may be either unmodified or modified diene rubbers.

The modified diene rubbers may be any diene rubber having a functional group interactive with filler such as silica. Examples include chain end-modified diene rubbers obtained by modifying at least one chain end of diene rubbers with a compound (modifier) having the functional group (i.e., chain end-modified diene rubbers terminated with the functional group); backbone-modified diene rubbers having the functional group in the backbone; backbone- and chain end-modified diene rubbers having the functional group in both the backbone and chain end (e.g., backbone- and chain end-modified diene rubbers in which the backbone has the functional group and at least one chain end is modified with the modifier); and chain end-modified diene rubbers into which a hydroxy or epoxy group has been introduced by modification (coupling) with a polyfunctional compound having two or more epoxy groups in the molecule. To better achieve the advantageous effect, modified diene rubbers having a functional group capable of reacting with silica are preferred among these.

The reason for such an advantageous effect is not clear but is believed to be as follows.

It is considered that the modified diene rubbers having a functional group capable of reacting with silica increase the number of polymer-silica networks, so that the plasticizers are more likely to enter the networks. Thus, it is believed that bleeding of the plasticizers is inhibited so that a decrease in wet grip performance during high-speed running can be prevented, thereby providing excellent wet grip performance during high-speed running.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. Preferred among these are amino (preferably amino whose hydrogen atom is replaced with a C1-C6 alkyl group), alkoxy (preferably C1-C6 alkoxy), and alkoxysilyl (preferably C1-C6 alkoxysilyl) groups.

The tread rubber composition has a combined content of isoprene-based rubbers, BR, and SBR having a styrene content of 30% by mass or lower and a vinyl content of 30% by mass or lower of 90% by mass or more based on 100% by mass of the rubber components. The combined content is preferably 93% by mass or more, more preferably 95% by mass or more, still more preferably 97% by mass or more, and may be 100% by mass. When the combined content is within the range indicated above, the advantageous effect tends to be better achieved.

To better achieve the advantageous effect, the tread rubber composition desirably satisfies the following relationship with respect to the amount (% by mass) of isoprene-based rubbers based on 100% by mass of the rubber components, the amount (% by mass) of polybutadiene rubbers based on 100% by mass of the rubber components,

and the amount (% by mass) of styrene-butadiene rubbers having a styrene content of 30% by mass or lower and a vinyl content of 30% by mass or lower based on 100% by mass of the rubber components:

[Amount of isoprene-based rubbers/(Amount of polybutadiene rubbers + Amount of styrene-butadiene rubbers having a styrene content of 30% by mass or lower and a vinyl content of 30% by mass or lower)] ≤ 0.80.

The reason for such an advantageous effect is not clear but is believed to be as follows.

It is considered that isoprene-based rubbers, which contain no vinyl group, hardly react with silane coupling agents and hardly form networks with silica, and therefore the plasticizers are less likely to be trapped in the rubber materials. To overcome this problem, it is believed that by satisfying the above relationship to reduce the isoprene-based rubber content, bleeding of the plasticizers is inhibited so that a decrease in wet grip performance during high-speed running can be prevented, thereby providing excellent wet grip performance during high-speed running.

The ratio of [Amount of isoprene-based rubbers/(Amount of polybutadiene rubbers + Amount of styrene-butadiene rubbers having a styrene content of 30% by mass or lower and a vinyl content of 30% by mass or lower)] is preferably 0.70 or lower, more preferably 0.64 or lower, still more preferably 0.50 or lower, particularly preferably 0.30 or lower. The lower limit is preferably 0.10 or higher, more preferably 0.15 or higher, still more preferably 0.20 or higher.

The tread rubber composition has at least a predetermined combined content of isoprene-based rubbers, BR, and SBR having a styrene content of 30% by mass or lower and a vinyl content of 30% by mass or lower. To better achieve the advantageous effect, the tread rubber composition suitably contains these three rubber components.

Examples of the isoprene-based rubbers include natural rubbers (NR), polyisoprene rubbers (IR), refined NR, modified NR, and modified IR. Examples of the NR include those commonly used in the rubber industry such as SIR20, RSS#3, and TSR20. Any IR may be used, and examples include those commonly used in the rubber industry such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. These may be used alone or in combinations of two or more.

When the tread rubber composition contains one or more isoprene-based rubbers, the amount of the isoprene-based rubbers based on 100% by mass of the rubber components is preferably 5% by mass or more, more preferably 10% by mass or more, still more preferably 15% by mass or more, particularly preferably 20% by mass or more. The upper limit is preferably 60% by mass or less, more preferably 50% by mass or less, still more preferably 40% by mass or less, particularly preferably 35% by mass or less. When the amount is within the range indicated above, the advantageous effect tends to be better achieved.

Any BR may be used, and examples include high-cis BR having a high cis content, BR containing syndiotactic polybutadiene crystals, and BR synthesized using rare earth catalysts (rare earth-catalyzed BR). These may be used alone or in combinations of two or more. In order to improve abrasion resistance, high-cis BR having a cis content of 90% by mass or higher is preferred among these.

Moreover, the BR may be either unmodified or modified BR. Examples of the modified BR include those into which functional groups as described for the modified diene rubbers have been introduced.

When the tread rubber composition contains one or more types of BR, the amount of the BR based on 100% by mass of the rubber components is preferably 5% by mass or more, more preferably 10% by mass or more, still more preferably 15% by mass or more. The upper limit is preferably 50% by mass or less, more preferably 30% by mass or less, still more preferably 25% by mass or less, particularly preferably 20% by mass or less. When the amount is within the range indicated above, the advantageous effect tends to be better achieved.

The BR used may be commercially available from Ube Industries, Ltd., JSR Corporation, Asahi Kasei Corporation, Zeon Corporation, etc.

Any SBR may be used, including for example emulsion-polymerized styrene-butadiene rubbers (E-SBR) and solution-polymerized styrene-butadiene rubbers (S-SBR). These may be used alone or in combinations of two or more.

The styrene content of the SBR is 30% by mass or lower, preferably 28% by mass or lower, more preferably 26% by mass or lower, still more preferably 25% by mass or lower. The lower limit is not limited but is preferably 5% by mass or higher, more preferably 8% by mass or higher, still more preferably 10% by mass or higher, particularly preferably 12% by mass or higher. When the styrene content is within the range indicated above, the advantageous effect tends to be better achieved.

Herein, the styrene content of the SBR is determined by $^1$H-NMR analysis.

The vinyl content of the SBR is 30% by mass or lower, preferably 28% by mass or lower, more preferably 26%

by mass or lower, still more preferably 25% by mass or lower. The lower limit is not limited but is preferably 5% by mass or higher, more preferably 8% by mass or higher, still more preferably 10% by mass or higher, particularly preferably 12% by mass or higher.

The vinyl content (1,2-butadiene unit content) can be measured by infrared absorption spectrometry.

SBR products manufactured or sold by Sumitomo Chemical Co., Ltd., JSR Corporation, Asahi Kasei Corporation, Zeon Corporation, Versalis, etc. may be used as the SBR.

The SBR may be either unmodified or modified SBR. Examples of the modified SBR include those into which functional groups as described for the modified diene rubbers have been introduced.

When the tread rubber composition contains one or more types of such SBR, the amount of the SBR based on 100% by mass of the rubber components is preferably 10% by mass or more, more preferably 20% by mass or more, still more preferably 30% by mass or more, particularly preferably 40% by mass or more. The upper limit is preferably 80% by mass or less, more preferably 60% by mass or less, still more preferably 55% by mass or less, particularly preferably 50% by mass or less. When the amount is within the range indicated above, the advantageous effect tends to be better achieved.

Examples of the silica used in the tread rubber composition include dry silica (anhydrous silica) and wet silica (hydrous silica). Wet silica is preferred among these because it has a large number of silanol groups.

The silica content per 100 parts by mass of the rubber components in the tread rubber composition is preferably 20 parts by mass or more, more preferably 40 parts by mass or more, still more preferably 50 parts by mass or more, particularly preferably 60 parts by mass or more. The upper limit of the silica content is preferably 150 parts by mass or less, more preferably 120 parts by mass or less, still more preferably 100 parts by mass or less, particularly preferably 80 parts by mass or less. When the silica content is within the range indicated above, the advantageous effect tends to be better achieved.

Particularly when the silica is used in a relatively small amount of for example 80 parts by mass or less, the advantageous effect can be better achieved. The reason for such an advantageous effect is not clear but is believed to be as follows.

It is considered that the use of too much silica increases heat build-up and hydrophilicity, thereby facilitating escape of the acetone extractable components, but when the amount is 80 parts by mass or less, the plasticizers are less likely to bleed out. Thus, it is believed that bleeding of the plasticizers is inhibited so that a decrease in wet grip performance during high-speed running can be prevented, thereby providing excellent wet grip performance during high-speed running.

The nitrogen adsorption specific surface area ($N_2SA$) of the silica is preferably 50 $m^2/g$ or more, more preferably 100 $m^2/g$ or more, still more preferably 150 $m^2/g$ or more. The $N_2SA$ of the silica is also preferably 250 $m^2/g$ or less, more preferably 220 $m^2/g$ or less, still more preferably 200 $m^2/g$ or less. When the $N_2SA$ is within the range indicated above, the advantageous effect tends to be better achieved.

The $N_2SA$ of the silica is measured by a BET method in accordance with ASTM D3037-93.

The silica used may be commercially available from Degussa, Rhodia, Tosoh Silica Corporation, Solvay Japan, Tokuyama Corporation, etc.

The tread rubber composition preferably contains a silane coupling agent with the silica.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, and bis(3-trimethoxysilylpropyl)tetrasulfide; mercapto silane coupling agents such as 3-mercaptopropyltrimethoxysilane; vinyl silane coupling agents such as vinyltriethoxysilane; amino silane coupling agents such as 3-aminopropyltriethoxysilane; glycidoxy silane coupling agents such as γ-glycidoxypropyltriethoxysilane; nitro silane coupling agents such as 3-nitropropyltrimethoxysilane; and chloro silane coupling agents such as 3-chloropropyltrimethoxysilane and 3-chloropropyltriethoxysilane. To better achieve the advantageous effect, sulfide or mercapto silane coupling agents are preferred among these, with mercapto silane coupling agents being more preferred.

The reason for such an advantageous effect is not clear but is believed to be as follows.

It is considered that when mercapto silane coupling agents are used to increase the reactivity with the silica, dispersion of the silica is increased, thereby promoting low heat build-up. Moreover, the silica becomes more hydrophobic so that repelling and escape of the plasticizers as acetone extractable components can be prevented. Thus, it is believed that bleeding of the plasticizers is inhibited so that a decrease in wet grip performance during high-speed running can be prevented, thereby providing excellent wet grip performance during high-speed running.

Usable mercapto silane coupling agents include compounds having a mercapto group and compounds in which a mercapto group is protected by a protecting group (for example, compounds represented by the formula (S1) below).

Particularly suitable mercapto silane coupling agents include silane coupling agents represented by the formula (S1) below and silane coupling agents containing linking units A and B represented by the formulas (I) and (II), respectively, below.

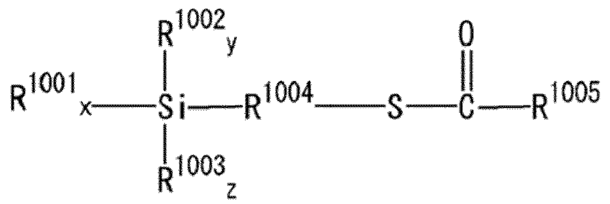

(S1)

In formula (S1), $R^{1001}$ represents a monovalent group selected from -Cl, -Br, $-OR^{1006}$, $-O(O=)CR^{1006}$, $-ON=CR^{1006}R^{1007}$, $-NR^{1006}R^{1007}$, and $-(OSiR^{1006}R^{1007})_h(OSiR^{1006}R^{1007}R^{1008})$ wherein $R^{1006}$, $R^{1007}$, and $R^{1008}$ may be the same or different and each represent a hydrogen atom or a C1-C18 monovalent hydrocarbon group, and h is 1 to 4 on average; $R^{1002}$ represents $R^{1001}$, a hydrogen atom, or a C1-C18 monovalent hydrocarbon group; $R^{1003}$ represents the group: -$[O(R^{1009}O)_j]$-wherein $R^{1009}$ represents a C1-C18 alkylene group, and j represents an integer of 1 to 4; $R^{1004}$ represents a C1-C18 divalent hydrocarbon group; $R^{1005}$ represents a C1-C18 monovalent hydrocarbon group; and x, y, and z are numbers satisfying the following relationships: $x + y + 2z = 3$, $0 \le x \le 3$, $0 \le y \le 2$, and $0 \le z \le 1$.

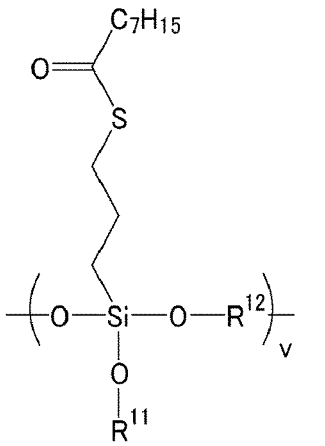

(I)

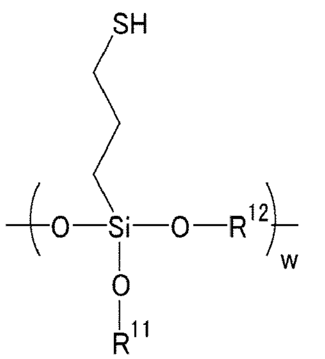

(II)

In formulas (I) and (II), v represents an integer of 0 or more; w represents an integer of 1 or more; $R^{11}$ represents a hydrogen atom, a halogen atom, a branched or unbranched C1-C30 alkyl group, a branched or unbranched C2-C30 alkenyl group, a branched or unbranched C2-C30 alkynyl group, or the alkyl group in which a terminal hydrogen atom is replaced with a hydroxy or carboxyl group; $R^{12}$ represents a branched or unbranched C1-C30 alkylene group, a branched or unbranched C2-C30 alkenylene group, or a branched or unbranched C2-C30 alkynylene group; and $R^{11}$ and $R^{12}$ may together form a ring structure.

Preferably, $R^{1005}$, $R^{1006}$, $R^{1007}$, and $R^{1008}$ in formula (S1) are each independently selected from the group consisting of C1-C18 linear, cyclic, or branched alkyl, alkenyl, aryl, and aralkyl groups. Moreover, when $R^{1002}$ is a C1-C18 monovalent hydrocarbon group, it is preferably selected from the group consisting of linear, cyclic, or branched alkyl, alkenyl, aryl, and aralkyl groups. $R^{1009}$ is preferably a linear, cyclic, or branched alkylene group, particularly preferably a linear alkylene group. Examples of $R^{1004}$ include C1-C18 alkylene groups, C2-C18 alkenylene groups, C5-C18 cycloalkylene groups, C6-C18 cycloalkylalkylene groups, C6-C18 arylene groups, and C7-C18 aralkylene groups. The alkylene and alkenylene groups may be either linear or branched. The cycloalkylene, cycloalkylalkylene, arylene,

and aralkylene groups may each have a functional group such as a lower alkyl group on the ring. Such $R^{1004}$ is preferably a C1-C6 alkylene group, particularly preferably a linear alkylene group such as a methylene group, an ethylene group, a trimethylene group, a tetramethylene group, a pentamethylene group, or a hexamethylene group.

Specific examples of $R^{1002}$, $R^{1005}$, $R^{1006}$, $R^{1007}$, and $R^{1008}$ in formula (S1) include methyl, ethyl, n-propyl, isopropyl, n-butyl, isobutyl, sec-butyl, tert-butyl, pentyl, hexyl, octyl, decyl, dodecyl, cyclopentyl, cyclohexyl, vinyl, propenyl, allyl, hexenyl, octenyl, cyclopentenyl, cyclohexenyl, phenyl, tolyl, xylyl, naphthyl, benzyl, phenethyl, and naphthylmethyl groups.

As for $R^{1009}$ in formula (S1), examples of the linear alkylene group include methylene, ethylene, n-propylene, n-butylene, and hexylene groups, and examples of the branched alkylene group include isopropylene, isobutylene, and 2-methylpropylene groups.

Specific examples of the silane coupling agents of formula (S1) include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, and 2-lauroylthioethyltrimethoxysilane. These may be used alone or in combinations of two or more. Particularly preferred among these is 3-octanoylthiopropyltriethoxysilane.

The linking unit A content of the silane coupling agents containing linking units A and B of formulas (I) and (II) is preferably 30 mol% or higher, more preferably 50 mol% or higher but is preferably 99 mol% or lower, more preferably 90 mol% or lower, while the linking unit B content is preferably 1 mol% or higher, more preferably 5 mol% or higher, still more preferably 10 mol% or higher but is preferably 70 mol% or lower, more preferably 65 mol% or lower, still more preferably 55 mol% or lower. Moreover, the combined content of linking units A and B is preferably 95 mol% or higher, more preferably 98 mol% or higher, particularly preferably 100 mol%.

The linking unit A or B content refers to the amount including the linking unit A or B present at the end of the silane coupling agent, if any. When the linking unit A or B is present at the end of the silane coupling agent, its form is not limited as long as it forms a unit corresponding to formula (I) or (II) representing the linking unit A or B.

As for $R^{11}$ in formulas (I) and (II), examples of the halogen atom include chlorine, bromine, and fluorine; examples of the branched or unbranched C1-C30 alkyl group include methyl and ethyl groups; examples of the branched or unbranched C2-C30 alkenyl group include vinyl and 1-propenyl groups; and examples of the branched or unbranched C2-C30 alkynyl group include ethynyl and propynyl groups.

As for $R^{12}$ in formulas (I) and (II), examples of the branched or unbranched C1-C30 alkylene group include ethylene and propylene groups; examples of the branched or unbranched C2-C30 alkenylene group include vinylene and 1-propenylene groups; and examples of the branched or unbranched C2-C30 alkynylene group include ethynylene and propynylene groups.

In the silane coupling agents containing linking units A and B of formulas (I) and (II), the total number of repetitions (v + w) consisting of the sum of the number of repetitions (v) of the linking unit A and the number of repetitions (w) of the linking unit B is preferably in the range of 3 to 300.

The silane coupling agent used may be commercially available from Degussa, Momentive, Shin-Etsu Silicone, Tokyo Chemical Industry Co., Ltd., AZmax. Co., Dow Corning Toray Co., Ltd., etc.

The silane coupling agent content per 100 parts by mass of the silica in the tread rubber composition is preferably 3 parts by mass or more, more preferably 5 parts by mass or more, still more preferably 8 parts by mass or more, but is preferably 25 parts by mass or less, more preferably 20 parts by mass or less, still more preferably 15 parts by mass or less. When the silane coupling agent content is within the range indicated above, the advantageous effect tends to be better achieved.

Examples of fillers other than silica which may be used in the tread rubber composition include fillers known in the rubber industry, such as carbon black, calcium carbonate, talc, alumina, clay, aluminum hydroxide, aluminum oxide, and mica. Carbon black is preferred among these.

Non-limiting examples of carbon black usable in the tread rubber composition include GPF, FEF, HAF, ISAF, and SAF. Usable commercial products are available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc.

The carbon black content per 100 parts by mass of the rubber components in the tread rubber composition is preferably 1 part by mass or more, more preferably 3 parts by mass or more, still more preferably 5 parts by mass or more. The carbon black content is also preferably 15 parts by mass or less, more preferably 10 parts by mass or less. When the carbon black content is within the range indicated above, the advantageous effect tends to be better achieved.

In the tread rubber composition, the nitrogen adsorption specific surface area ($N_2SA$) of the carbon black is preferably 50 $m^2/g$ or more, more preferably 70 $m^2/g$ or more, still more preferably 85 $m^2/g$ or more. The upper limit of the $N_2SA$ of the carbon black is not limited but is preferably 150 $m^2/g$ or less, more preferably 130 $m^2/g$ or less, still more preferably 120 $m^2/g$ or less. When the $N_2SA$ is within the range indicated above, the advantageous effect tends to be

better achieved.

The nitrogen adsorption specific surface area of the carbon black is determined by the method A of JIS K6217.

To better achieve the advantageous effect, the tread rubber composition desirably contains a functionalized resin as a plasticizer. Suitable examples of the functionalized resin include functionalized resins having a functional group containing at least one element selected from the group consisting of oxygen, silicon, and nitrogen.

The reason for such an advantageous effect is not clear but is believed to be as follows.

It is considered that when a functionalized resin is incorporated, the functionalized resin binds to the silica, thereby preventing the phenomenon in which the plasticizers as acetone extractable components repel and escape from the hydrophilic silica. Thus, it is believed that bleeding of the plasticizers is inhibited so that a decrease in wet grip performance during high-speed running can be prevented, thereby providing excellent wet grip performance during high-speed running.

Examples of the functional group containing at least one element selected from the group consisting of oxygen, silicon, and nitrogen include the above-mentioned functional groups which contain at least one element selected from the group consisting of oxygen, silicon, and nitrogen, as well as other known functional groups containing the above element. In particular, preferred are groups represented by $-Si(R)_3$ wherein Rs are the same or different and each represent a hydrogen atom, an organic element-containing group, an inorganic element-containing group, an organic element- and inorganic element-containing group, or the like.

The functionalized resin can be prepared by known methods, including for example a slurry method and a metathesis method. Specifically, for example, the functionalized resin may be prepared by reacting in a known manner a polymer serving as the polymer backbone of the functionalized resin with a functional compound capable of introducing a functional group containing at least one element selected from the group consisting of oxygen, silicon, and nitrogen.

The polymer serving as the polymer backbone may be any polymer that can form the backbone. Examples include liquid resins (polymers that are liquid at 25°C) and solid resins (polymers that are solid at 25°C). Solid resins are preferred among these. These polymers may be used alone or in combinations of two or more.

Any liquid resin may be used, and examples include liquid aromatic vinyl polymers, coumarone-indene resins, indene resins, terpene resins, and rosin resins, and hydrogenated products thereof. These may be used alone or in combinations of two or more. Liquid aromatic vinyl polymers are preferred among these.

Examples of the liquid aromatic vinyl polymers include resins produced by polymerization of α-methylstyrene and/or styrene. Specific examples include liquid resins such as styrene homopolymers, α-methylstyrene homopolymers, and copolymers of α-methylstyrene and styrene.

Examples of the liquid coumarone-indene resins include resins that contain coumarone and indene as the main monomer components forming the backbone (main chain) of the resins. Examples of monomer components which may be contained in the backbone in addition to coumarone and indene include styrene, α-methylstyrene, methylindene, and vinyltoluene.

Examples of the liquid indene resins include liquid resins that contain indene as the main monomer component forming the backbone (main chain) of the resins.

Examples of the liquid terpene resins include liquid terpene-based resins typified by resins produced by polymerization of terpene compounds such as α-pinene, β-pinene, camphene, or dipentene, and terpenephenol resins produced from terpene compounds and phenolic compounds.

Examples of the liquid rosin resins include liquid rosin-based resins typified by natural rosins, polymerized rosins, and modified rosins, and esterified or hydrogenated products thereof.

Any solid resin (resin that is solid at 25°C) may be used, and examples include solid styrene resins, coumarone-indene resins, terpene resins, p-t-butylphenol acetylene resins, acrylic resins, dicyclopentadiene resins (DCPD resins), C5 petroleum resins, C9 petroleum resins, and C5/C9 petroleum resins. These may be used alone or in combinations of two or more. Solid styrene resins are preferred among these.

The term "solid styrene resins" refers to solid polymers produced from styrenic monomers as structural monomers, and examples include polymers produced by polymerization of styrenic monomers as main components (at least 50% by mass). Specific examples include homopolymers produced by polymerization of single styrenic monomers (e.g., styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, or p-chlorostyrene), copolymers produced by copolymerization of two or more styrenic monomers, and copolymers of styrenic monomers and additional monomers copolymerizable therewith. Examples of the additional monomers include acrylonitriles such as acrylonitrile and methacrylonitrile; unsaturated carboxylic acids such as acrylic acid and methacrylic acid; unsaturated carboxylic acid esters such as methyl acrylate and methyl methacrylate; dienes such as chloroprene, butadiene, and isoprene; olefins such as 1-butene and 1-pentene; and α,β-unsaturated carboxylic acids and acid anhydrides thereof such as maleic anhydride.

Examples of the solid coumarone-indene resins include solid resins having structural units as described for the liquid coumarone-indene resins above.

Examples of the solid terpene resins include polyterpene, terpene phenol, and aromatic modified terpene resins.

Examples of the solid polyterpene resins include solid terpene resins made from terpene compounds, such as α-pinene resins, β-pinene resins, limonene resins, dipentene resins, and β-pinene-limonene resins, as well as solid hydrogenated terpene resins obtained by hydrogenation of these terpene resins. Examples of the solid terpene phenol resins include solid resins produced by copolymerization of terpene compounds and phenolic compounds, and solid resins obtained by hydrogenation of these resins. Specific examples include solid resins produced by condensation of terpene compounds, phenolic compounds, and formaldehyde. Examples of the solid aromatic modified terpene resins include solid resins obtained by modification of terpene resins with aromatic compounds, and solid resins obtained by hydrogenation of these resins.

Examples of the solid p-t-butylphenol acetylene resins include solid resins produced by condensation of p-t-butylphenol and acetylene.

Non-limiting examples of the solid acrylic resins include solvent-free solid acrylic resins. Examples of the monomer components of the solid acrylic resins include (meth)acrylic acids and (meth)acrylic acid derivatives such as (meth)acrylic acid esters (e.g., alkyl esters, aryl esters, and aralkyl esters), (meth)acrylamides, and (meth)acrylamide derivatives. In addition to the (meth)acrylic acids or (meth)acrylic acid derivatives, aromatic vinyls, such as styrene, α-methylstyrene, vinyltoluene, vinylnaphthalene, divinylbenzene, trivinylbenzene, or divinylnaphthalene, may also be used as the monomer components of the solid acrylic resins. The solid acrylic resins may be formed only of the (meth)acrylic components or may further contain constituent components other than the (meth)acrylic components. Moreover, the solid acrylic resins may contain a hydroxy group, a carboxyl group, a silanol group, or other groups.

The softening point of the solid resins forming the polymer backbone is preferably 160°C or lower, more preferably 130°C or lower, still more preferably 110°C or lower, particularly preferably 96°C or lower. The lower limit is preferably 60°C or higher, more preferably 70°C or higher, still more preferably 80°C or higher, particularly preferably 85°C or higher. When the softening point is within the range indicated above, the advantageous effect tends to be better achieved.

Herein, the softening point of the solid resins is determined in accordance with JIS K 6220-1:2001 using a ring and ball softening point measuring apparatus and defined as the temperature at which the ball drops down.

The above-mentioned functional compound may be any compound capable of introducing a functional group containing at least one element selected from the group consisting of oxygen, silicon, and nitrogen, preferably a compound capable of introducing a silicon-containing functional group.

Suitable examples of the functional compound include compounds represented by the following formula:

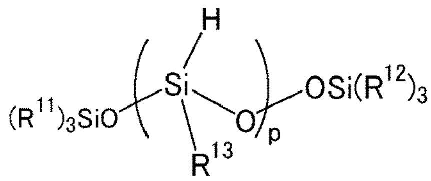

wherein p represents an integer of 1 to 1000; each of $R^{11}$ and $R^{12}$ is the same or different and represents an optionally substituted monovalent hydrocarbon group; and each $R^{13}$ is the same or different and represents an optionally substituted monovalent hydrocarbon group.

The symbol p is preferably 5 or more, more preferably 10 or more, still more preferably 20 or more, but is preferably 800 or less, more preferably 700 or less, still more preferably 600 or less.

The optionally substituted monovalent hydrocarbon group as $R^{11}$, $R^{12}$, or $R^{13}$ preferably has 1 to 20 carbon atoms. The number of carbon atoms is more preferably 2 or more, but is more preferably 14 or less, still more preferably 12 or less. Examples of the optionally substituted monovalent hydrocarbon group include substituted or unsubstituted alkyl and alkenyl groups. Examples of the alkyl groups include methyl, ethyl, n-propyl, isopropyl, n-butyl, sec-butyl, tert-butyl, phenyl, and fluoroalkane groups. Examples of the alkenyl groups include vinyl, allyl, 1-propenyl, and 1-methylethenyl groups.

Other suitable examples of the functional compound include compounds represented by the following formula:

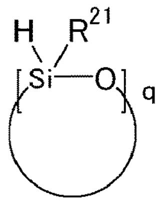

wherein q represents an integer of 2 to 40, and $R^{21}$s are the same or different and each represent an optionally substituted monovalent hydrocarbon group.

The symbol q is preferably 3 or more, more preferably 4 or more, still more preferably 5 or more, but is preferably 38 or less, more preferably 36 or less, still more preferably 35 or less.

The optionally substituted monovalent hydrocarbon group as $R^{21}$ preferably has 1 to 20 carbon atoms. The number of carbon atoms is more preferably 2 or more, but is more preferably 14 or less, still more preferably 12 or less. Specific examples of $R^{21}$ include those as described for the optionally substituted monovalent hydrocarbon group as $R^{11}$, $R^{12}$, or $R^{13}$.

Still other suitable examples of the functional compound include compounds represented by the following formula:

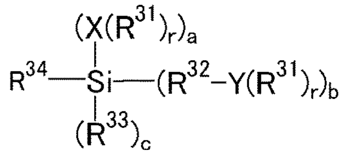

wherein Xs are the same or different and each represent a nitrogen atom, an oxygen atom, or a sulfur atom;

Ys are the same or different and each represent a boron atom, a nitrogen atom, an oxygen atom, a silicon atom, or a sulfur atom;
each $R^{31}$ is the same or different and represents a hydrogen atom or an optionally substituted monovalent hydrocarbon group;
each $R^{32}$ is the same or different and represents an optionally substituted divalent hydrocarbon group;
$R^{33}$s are the same or different and each represent a hydrogen atom, a halogen atom, a sulfonate group, or an optionally substituted monovalent hydrocarbon group;
$R^{31}$, $R^{32}$, and $R^{33}$ may together form a monocyclic ring or a polycyclic ring;
$R^{34}$ represents an optionally substituted monovalent hydrocarbon group;
a, b, and c are the same or different and represent integers, provided that a + b + c = 3;
each of X and Y is the same or different, and when Y is a boron atom, r = 2; when X or Y is a nitrogen atom, r = 2; when X or Y is an oxygen atom or a sulfur atom, r = 1; and when Y is a silicon atom, r = 3.

Xs are the same or different and each represent a nitrogen atom, an oxygen atom, or a sulfur atom, preferably an oxygen atom.

Ys are the same or different and each represent a boron atom, a nitrogen atom, an oxygen atom, a silicon atom, or a sulfur atom, preferably an oxygen atom.

The optionally substituted monovalent hydrocarbon group as $R^{31}$, $R^{33}$, or $R^{34}$ preferably has 1 to 20 carbon atoms. The number of carbon atoms is more preferably 2 or more, but is more preferably 14 or less, still more preferably 12 or less. Specific examples of $R^{31}$, $R^{33}$, or $R^{34}$ include those as described for the optionally substituted monovalent hydrocarbon group as $R^{11}$, $R^{12}$, or $R^{13}$.

The optionally substituted divalent hydrocarbon group as $R^{32}$ preferably has 1 to 20 carbon atoms. The number of carbon atoms is more preferably 2 or more, but is more preferably 14 or less, still more preferably 12 or less. Examples of the optionally substituted divalent hydrocarbon group include substituted or unsubstituted alkylene and arylene groups. Examples of the alkylene groups include methylene, ethylene, and trimethylene groups. Examples of the arylene groups include phenylene, naphthylene, and biphenylene groups.

The symbols a, b, and c are the same or different and each represent an integer of 0 to 3, provided that a + b + c = 3.

Still other suitable examples of the functional compound include compounds represented by the following formula:

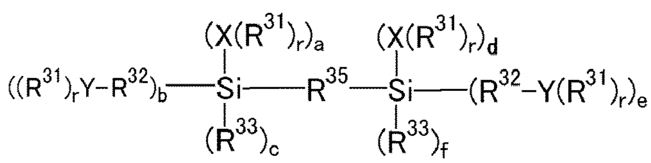

wherein Xs are the same or different and each represent a nitrogen atom, an oxygen atom, or a sulfur atom;

Ys are the same or different and each represent a boron atom, a nitrogen atom, an oxygen atom, a silicon atom, or

a sulfur atom;
each $R^{31}$ is the same or different and represents a hydrogen atom or an optionally substituted monovalent hydrocarbon group;
each $R^{32}$ is the same or different and represents an optionally substituted divalent hydrocarbon group;
$R^{33}$s are the same or different and each represent a hydrogen atom, a halogen atom, a sulfonate group, or an optionally substituted monovalent hydrocarbon group;
$R^{31}$, $R^{32}$, and $R^{33}$ may together form a monocyclic ring or a polycyclic ring;
$R^{35}$ represents an optionally substituted divalent hydrocarbon group;
a, b, and c are the same or different and represent integers, provided that a + b + c = 3;
d, e, and f are the same or different and represent integers, provided that d + e + f = 3;
each of X and Y is the same or different, and when Y is a boron atom, r = 2; when X or Y is a nitrogen atom, r = 2; when X or Y is an oxygen atom or a sulfur atom, r = 1; and when Y is a silicon atom, r = 3.

Xs are the same or different and each represent a nitrogen atom, an oxygen atom, or a sulfur atom, preferably an oxygen atom.
Ys are the same or different and each represent a boron atom, a nitrogen atom, an oxygen atom, a silicon atom, or a sulfur atom, preferably an oxygen atom.
The optionally substituted monovalent hydrocarbon group as $R^{31}$ or $R^{33}$ preferably has 1 to 20 carbon atoms. The number of carbon atoms is more preferably 2 or more, but is more preferably 14 or less, still more preferably 12 or less. Specific examples of $R^{31}$ or $R^{33}$ include those as described for the optionally substituted monovalent hydrocarbon group as $R^{11}$, $R^{12}$, or $R^{13}$.
The optionally substituted divalent hydrocarbon group as $R^{32}$ or $R^{35}$ preferably has 1 to 20 carbon atoms. The number of carbon atoms is more preferably 2 or more, but is more preferably 14 or less, still more preferably 12 or less. Specific examples of $R^{32}$ or $R^{35}$ include those as described for the optionally substituted divalent hydrocarbon group as $R^{32}$ above.
The symbols a, b, and c are the same or different and each represent an integer of 0 to 3, provided that a + b + c = 3.
The symbols d, e, and f are the same or different and each represent an integer of 0 to 3, provided that d + e + f = 3.
Specific examples of the functional compound include vinyltrimethoxysilane, vinylmethyldimethoxysilane, vinyldimethylmethoxysilane, vinyltriethoxysilane, vinylmethyldiethoxysilane, vinyldimethylethoxysilane, allyltrimethoxysilane, allylmethyldimethoxysilane, allyldimethylmethoxysilane, allyltriethoxysilane, allylmethyldiethoxysilane, allyldimethylethoxysilane, hexenyltrimethoxysilane, hexenylmethyldimethoxysilane, hexenyldimethylmethoxysilane, hexenyltriethoxysilane, hexenylmethyldiethoxysilane, hexenyldimethylethoxysilane, octenyltrimethoxysilane, octenylmethyldimethoxysilane, octenyldimethylmethoxysilane, octenyltriethoxysilane, octenylmethyldiethoxysilane, octenyldimethylethoxysilane, norbornenylethyltrimethoxysilane, norbornenylethylmethyldimethoxysilane, norbornenylethyldimethylmethoxysilane, norbornenylethyltriethoxysilane, norbornenylethylmethyldiethoxysilane, norbornenylethyldimethylethoxysilane, (meth)acryloxypropyltrimethoxysilane, (meth)acryloxypropylmethyldimethoxysilane, (meth)acryloxypropyldimethylmethoxysilane, (meth)acryloxypropyltriethoxysilane, (meth)acryloxypropylmethyldiethoxysilane, (meth)acryloxypropyldimethylethoxysilane, (meth)acryloxytrimethoxysilane, (meth)acryloxymethylmethyldimethoxysilane, (meth)acryloxymethyldimethylmethoxysilane, (meth)acryloxymethyltriethoxysilane, (meth)acryloxymethylmethyldiethoxysilane, (meth)acryloxymethyldimethylethoxysilane, (meth)acryloxyoctyltrimethoxysilane, (meth)acryloxyoctylmethyldimethoxysilane, (meth)acryloxyoctyldimethylmethoxysilane, (meth)acryloxyoctyltriethoxysilane, (meth)acryloxyoctylmethyldiethoxysilane, and (meth)acryloxyoctyldimethylethoxysilane. For easy availability, examples include vinyltrimethoxysilane, vinyltriethoxysilane, and (meth)acryloxypropyltrimethoxysilane. Allyltriethoxysilane is preferred among these.
Silane functionalized resins represented by the following general structural formula (I) may also be suitably used as the functionalized resin. The term "Resin" in the formula represents the backbone of the resin.

$$\text{Resin-}[Z_k\text{-}X_n\text{-}R^1\text{-}(CH_2)_m\text{-}Si(R^2)_p]_q \qquad (I)$$

In formula (I), Z represents an optionally heteroatom-containing aromatic or aliphatic group;

X represents a heteroatom-containing linker selected from a sulfur atom, an oxygen atom, a nitrogen atom, a carbonyl group, or a combination thereof;
$R^1$ represents at least one aliphatic and/or aromatic $C_1$-$C_{18}$ and/or heteroatom-containing linking group;
$R^2$s are independently selected from a $C_1$-$C_{18}$ alkoxy, aryloxy, alkyl, or aryl group, or H or OH, provided that at least one $R^2$ is a $C_1$-$C_{18}$ alkoxy or aryloxy group, or H or OH;
q represents an integer of at least 1;
k represents an integer of 0 or 1;

n represents an integer of 1 to 10;
m represents an integer of 0 to 10; and
p represents 1, 2, or 3.

Examples of Z include aromatic groups (e.g., six-membered aromatic groups) and saturated or unsaturated alicyclic groups. Examples of X include an oxygen atom, a carbonyl group, and a sulfur atom.

Examples of $R^1$ include $-O-CO-NH-R^3-(CH_2)_2-$, $-O-CO-R^3-(CH_2)_2-$, $-O-CH_2-R^3-(CH_2)_2-$, $-CO-R^3-(CH_2)_2-$, and $-CO-NH-R^3-(CH_2)_2-$, and mixtures thereof. Examples of $R^3$ include optionally heteroatom-containing aliphatic or aromatic $C_1$-$C_8$ carbon chains, with aliphatic or aromatic $C_1$-$C_8$ carbon chains being preferred.

Preferably, n is an integer of 1 to 9, more preferably 1 to 5, still more preferably 1 to 3, particularly preferably 1 or 2. Preferably, m is an integer of 1 to 10, more preferably 4 to 10, still more preferably 8 to 10, particularly preferably 9 or 10.

The silane-containing group grafted on the resin as shown in formula (I) may be located at the terminal polymer resin unit (end-capped), or randomly distributed along the polymer backbone (at the pendant positions within the polymer resin), or subjected to a combination thereof, for example.

The amount of the silane-containing group grafted on the resin as shown in formula (I) is preferably 0.001 to 100 mol%, more preferably 0.1 to 50 mol%, still more preferably 0.1 to 30 mol%, particularly preferably 0.1 to 25 mol%.

The resin shown in formula (I) preferably contains one or more terminal functional groups $-[Z_k-X_n-R^1-(CH_2)_m-Si(R^2)_p]_q$. The resin shown in formula (I) is preferably functionalized by one or a plurality (q) of $Z_k-X_n-R^1-(CH_2)_m-Si(R^2)_p$ groups bound pendant to the backbone of the resin in a random, segmented, or block configuration. Other embodiments include embodiments in which they are end-capped on the side chains, and embodiments including mixtures of those end-capped on and pendant to the side chains.

Other suitable examples of the silane functionalized resins of formula (I) include:

$$\text{Resin- }[Z_k\text{-O-}CH_2CO\text{-NH-}(CH_2)_3\text{-Si}(OCH_2CH_3)_3]_q,$$

$$\text{Resin- }[Z_k\text{-O-CO-CH}(CH_2COOH)\text{- }(CH_2)_3\text{-Si}(OCH_2CH_3)_3]_q,$$

$$\text{Resin- }[Z_k\text{-CO-NH-}(CH_2)_3\text{-Si}(OCH_2CH_3)_3]_q,$$

$$\text{Resin- }[Z_k\text{-CO-}(CH_2)_2\text{-CO-NH-}(CH_2)_3\text{-Si}(OCH_2CH_3)_3]_q,$$

$$\text{Resin- }[Z_k\text{-O-CO-NH-}(CH_2)_3\text{-Si}(OCH_2CH_3)_3]_q,$$

and Resin- $[Z_k-O-(CH_2)_3-Si(OCH_2CH_3)_3]_q$ wherein Z, k, and q are as described above.

Here, "q", which is the number of added silane groups, may be any number but usually 1 to 20, 1 to 19, 1 to 18, 1 to 17, 1 to 16, 1 to 15, 1 to 14, 1 to 13, 1 to 12, 1 to 11, 1 to 10, 1 to 9, 1 to 8, 1 to 7, 1 to 6, 1 to 5, 1 to 4, 1 to 3, or 1 or 2.

Still other suitable examples of the silane functionalized resins of formula (I) include:

$$\text{Resin- }[Z_k\text{-}X_n\text{-}R^1\text{-}(CH_2)_m\text{-Si}(R^2)_p]_q,$$

$$\text{Resin-}Z_k\text{-}SO_2NH\text{-}(CH_2)_2\text{-}CH_2\text{-Si}(OCH_2CH_3)_3,$$

$$\text{Resin-}Z_k\text{-SONH-}(CH_2)_2\text{-}CH_2\text{-Si}(OCH_2CH_3)_3,$$

$$\text{Resin-}Z_k\text{-S-}(CH_2)_2\text{-}CH_2\text{-Si}(OCH_2CH_3)_3,$$

$$\text{Resin-}Z_k\text{-SO-}(CH_2)_2\text{-}CH_2\text{-Si}(OCH_2CH_3)_3,$$

$$\text{Resin-}Z_k\text{-}SO_2\text{-}(CH_2)_2\text{-}CH_2\text{-Si}(OCH_2CH_3)_3,$$

$$\text{Resin- }[Z_k(COO(CH_2)_2OCOC(COCH_3)N(CH_2)_3Si(OCH_3)_3)]_q\text{-Resin},$$

$$\text{Resin-}Z_k\text{-}SO_2NH\text{-}(CH_2)_2\text{-}CH_2\text{-Si}(OCH_2CH_3)_3,$$

and Resin-$Z_k$-Ph-O-$Si(OCH_2CH_3)_3$ wherein Z, k, X, n, $R^1$, m, $R^2$, p, and q are as described above.

Here, "q", which is the number of added silane groups, may be any number but usually 1 to 20, 1 to 19, 1 to 18, 1 to 17, 1 to 16, 1 to 15, 1 to 14, 1 to 13, 1 to 12, 1 to 11, 1 to 10, 1 to 9, 1 to 8, 1 to 7, 1 to 6, 1 to 5, 1 to 4, 1 to 3, or 1 or 2.

The silane functionalized resins of formula (I) can be produced by known methods, for example, as described in JP 2020-513060 T, which is hereby incorporated by reference in its entirety.

The functionalized resin content per 100 parts by mass of the rubber components in the tread rubber composition is preferably 5 parts by mass or more, more preferably 15 parts by mass or more, still more preferably 18 parts by mass or more, particularly preferably 20 parts by mass or more. The upper limit is preferably 35 parts by mass or less, more preferably 30 parts by mass or less, still more preferably 25 parts by mass or less. When the functionalized resin content is within the range indicated above, the advantageous effect tends to be better achieved.

The tread rubber composition may further contain additional plasticizers other than the functionalized resins. Non-limiting examples of such additional plasticizers include oils, liquid plasticizers with plasticity which are liquid at 25°C such as the above-mentioned liquid resins, and solid plasticizers with plasticity which are solid at 25°C such as the above-mentioned solid resins. These plasticizers may be used alone or in combinations of two or more.

The plasticizer content (the combined amount of the functionalized resins, oils, liquid plasticizers other than the functionalized resins (e.g., liquid resins), and solid plasticizers other than the functionalized resins (e.g., solid resins)) per 100 parts by mass of the rubber components in the tread rubber composition is preferably 7.5 parts by mass or more, more preferably 15 parts by mass or more, still more preferably 18 parts by mass or more, particularly preferably 20 parts by mass or more. The upper limit is preferably 35 parts by mass or less, more preferably 30 parts by mass or less, still more preferably 25 parts by mass or less. When the plasticizer content is within the range indicated above, the advantageous effect tends to be better achieved.

Non-limiting examples of the oils among the liquid plasticizers include conventional oils, including, for example: process oils such as paraffinic process oils, aromatic process oils, and naphthenic process oils; low PCA (polycyclic aromatic) process oils such as TDAE and MES; and vegetable oils; and mixtures thereof. Aromatic process oils are preferred among these. Specific examples of the aromatic process oils include Diana Process Oil AH series available from Idemitsu Kosan Co., Ltd.

Examples of the liquid resins among the liquid plasticizers include those described above. Examples of the solid resins among the solid plasticizers include those described above.

The liquid or solid plasticizer used may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

The tread rubber composition preferably contains sulfur.

The sulfur content per 100 parts by mass of the rubber components is preferably 0.5 to 5.0 parts by mass, more preferably 0.7 to 3.0 parts by mass.

Examples of the sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc.

The tread rubber composition preferably contains a vulcanization accelerator. The vulcanization accelerator content per 100 parts by mass of the rubber components is preferably 1.0 to 5.0 parts by mass, more preferably 1.5 to 4.5 parts by mass.

Examples of the vulcanization accelerator include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Sulfenamide and/or guanidine vulcanization accelerators are preferred among these.

The tread rubber composition may contain a wax, antioxidant, stearic acid, zinc oxide, or organic crosslinking agent.

In the tire 2 in Fig. 1, the tread 4 has a maximum thickness of 10.0 mm or less.

Fig. 2 is an enlarged cross-sectional view in the vicinity of the tread 4 of the tire 2 in Fig. 1. In Fig. 2, the vertical direction corresponds to the radial direction of the tire 2, the horizontal direction corresponds to the axial direction of the tire 2, and the direction perpendicular to the paper corresponds to the circumferential direction of the tire 2.

In Fig. 2, the symbol P denotes a point on the tread surface 24. The point P is located outward from an axially innermost groove 26. The double-sided arrow T denotes the thickness of the tread 4 measured at the point P. The thickness T is the sum of the thicknesses of the cap layer 30 and the base layer 28 measured at the point P. The thickness T is measured along the normal of the tread surface 24 at the point P. Figs. 1 and 2 show an example of a two-layer tread 4 including a cap layer 30 and a base layer 28. In the case of a monolayer tread 4, the thickness T of the tread is

the thickness of the monolayer tread measured at the point P. In the case of a three or more layer tread, the thickness T of the tread is the sum of the thicknesses of the three or more layers measured at the point P, wherein the thickness T at the point P is also measured along the normal of the tread surface 24 at the point P.

Moreover, in Fig. 1, the maximum tread 4 thickness refers to the largest of the tread thicknesses (each being the sum of the thicknesses of the cap layer 30 and the base layer 28 in Fig. 1) measured at points on the tread surface 24, and is 10.0 mm or less. The maximum tread 4 thickness is preferably 9.0 mm or less, more preferably 8.0 mm or less, still more preferably 7.5 mm or less. The lower limit is preferably 5.5 mm or more, more preferably 6.0 mm or more. When the maximum tread thickness is within the range indicated above, the advantageous effect tends to be better achieved.

To better achieve the advantageous effect, the tire 2 in Fig. 1 desirably satisfies the following relationship with respect to the above-described acetone extractable content (% by mass) and the maximum tread 4 thickness (mm): Acetone extractable content $\times$ Maximum tread thickness < 83.

The value of "Acetone extractable content $\times$ Maximum tread thickness" is preferably less than 80, more preferably 78 or less, still more preferably 77 or less, particularly preferably 76 or less. The lower limit is preferably 50 or more, more preferably 60 or more, still more preferably 63 or more, particularly preferably 65 or more. Since it is considered that the larger the tread thickness, the greater the centrifugal force applied to the tread portion, maintaining the product of the maximum tread thickness and the acetone extractable content below a certain value facilitates the prevention of the separation of the acetone extractable components from the tread portion, with a result that wet grip performance during high-speed running tends to be further enhanced.

To better achieve the advantageous effect, the tire 2 in Fig. 1 desirably satisfies the following relationship with respect to the above-described tan $\delta$ at 0°C and the maximum tread 4 thickness (mm):

$$(\tan\delta \text{ at } 0°C/\text{Maximum tread thickness}) \times 1000 > 60.0.$$

The value of "(tan $\delta$ at 0°C/Maximum tread thickness) $\times$ 1000" is preferably 70.0 or more, more preferably 75.0 or more, still more preferably 80.0 or more, particularly preferably 87.5 or more. The upper limit is preferably 130.0 or less, more preferably 120.0 or less, still more preferably 110.0 or less, particularly preferably 100.0 or less. It is considered that a smaller tread thickness leads to less deformation of the tread portion and thus less effect in enhancing wet grip performance during high-speed running, but since heat build-up at low temperatures increases with a decrease in thickness, better wet grip performance during high-speed running tends to be obtained.

The tire 2 in Fig. 1 has a tire outer diameter D of 700 mm or less.

The term "tire outer diameter D" refers to the outer diameter of a tire under no load mounted on an applicable rim and filled with air at a regulated pressure. The tire outer diameter D is preferably 676 mm or less, more preferably 652 mm or less, still more preferably 635 mm or less, particularly preferably 627 mm or less. The lower limit is not limited but is preferably 580 mm or more, more preferably 590 mm or more, still more preferably 600 mm or more, particularly preferably 610 mm or more.

To better achieve the advantageous effect, the tire 2 in Fig. 1 desirably satisfies the following relationship with respect to the above-described acetone extractable content (% by mass) and the tire outer diameter D (mm): Acetone extractable content $\times$ Tire outer diameter < 6500.

The value of "Acetone extractable content $\times$ Tire outer diameter" is preferably 6300 or less, more preferably 6100 or less, still more preferably 6000 or less, particularly preferably 5900 or less. The lower limit is preferably 4000 or more, more preferably 4500 or more, still more preferably 4800 or more, particularly preferably 5000 or more. When the value is within the range indicated above, the advantageous effect tends to be better achieved. Since it is considered that the larger the tire, the greater the centrifugal force applied to the tread portion, maintaining the product of the tire outer diameter and the acetone extractable content below a certain value facilitates the prevention of the separation of the acetone extractable components from the tread portion, with a result that wet grip performance during high-speed running tends to be further enhanced.

To better achieve the advantageous effect, the tire 2 in Fig. 1 desirably satisfies the following relationship with respect to the above-described tan $\delta$ at 0°C and the tire outer diameter D (mm):

$$(\tan\delta \text{ at } 0°C/\text{Tire outer diameter}) \times 1000 > 0.70.$$

The value of "(tan $\delta$ at 0°C/Tire outer diameter) $\times$ 1000" is preferably 0.90 or more, more preferably 0.96 or more, still more preferably 1.12 or more, particularly preferably 1.28 or more. The upper limit is preferably 2.00 or less, more preferably 1.80 or less, still more preferably 1.60 or less, particularly preferably 1.40 or less. When the value is within the range indicated above, the advantageous effect tends to be better achieved.

In the tire 2 in Fig. 1, each sidewall 6 extends substantially inwardly in the radial direction from the end of the tread 4. The radially outer portion of the sidewall 6 is bonded to the tread 4. The radially inner portion of the sidewall 6 is bonded to the clinch 10.

Each wing 8 is located between the tread 4 and the sidewall 6. The wing 8 is bonded to both the tread 4 and the sidewall 6.

Each clinch 10 is located radially inward of the sidewall 6. The clinch 10 is located outward in the axial direction from the bead 12 and the carcass 14.

Each bead 12 is located axially inward of the clinch 10. The bead 12 includes a core 32 and an apex 34 that radially outwardly extends from the core 32. The core 32 has a ring shape and contains a wound non-stretchable wire or the like. The apex 34 is radially outwardly tapered.

The carcass 14 includes a carcass ply 36. In the tire 2, the carcass 14 consists of one carcass ply 36 but may include two or more carcass plies.

In the tire 2, the carcass ply 36 extends between the beads 12 on opposite sides along the tread 4 and the sidewalls 6. The carcass ply 36 is folded around each core 32 from the inside to the outside in the axial direction. The thus folded carcass ply 36 is provided with a main portion 36a and a pair of folded portions 36b. Namely, the carcass ply 36 includes a main portion 36a and a pair of folded portions 36b.

Though not shown, the carcass ply 36 may, for example, be formed of a large number of parallel cords and a topping rubber. The carcass 14 preferably has a radial structure.

The belt 16 is located radially inward of the tread 4. The belt 16 is stacked on the carcass 14. The belt 16 consists of an interior layer 38 and an exterior layer 40.

Though not shown, the interior layer 38 and the exterior layer 40 may each, for example, be formed of a large number of parallel cords and a topping rubber. For example, each cord is tilted relative to the equatorial plane. The tilt direction of the cords in the interior layer 38 relative to the equatorial plane is opposite to the tilt direction of the cords in the exterior layer 40 relative to the equatorial plane.

The band 18 is located radially outward of the belt 16. The band 18 has a width that is equal to the width of the belt 16 in the axial direction. The band 18 may be wider than the belt 16.

Though not shown, the band 18 may, for example, be formed of cords and a topping rubber. For example, the cords are spirally wound.

The belt 16 and the band 18 form a reinforcement layer. The reinforcement layer may be formed only of the belt 16.

The innerliner 20 is located inward of the carcass 14. The innerliner 20 is bonded to the inner surface of the carcass 14.

Each chafer 22 is located near the bead 12. In this embodiment, the chafer 22 may, for example, be formed of a fabric and a rubber impregnated in the fabric. The chafer 22 may be integrated with the clinch 10.

In the tire 2, the grooves 26 of the tread 4 include main grooves 42. As shown in Fig. 1, the tread 4 has a plurality of, specifically three, main grooves 42 engraved thereon. The main grooves 42 are provided at intervals in the axial direction. Four ribs 44 extending in the circumferential direction are defined by the three main grooves 42 engraved on the tread 4. In other words, each main groove 42 is between one rib 44 and another rib 44.

The main grooves 42 extend in the circumferential direction. The main grooves 42 are continuous in the circumferential direction without interruption.

In the production of the tire 2, a plurality of rubber components are assembled to obtain a raw cover (unvulcanized tire 2). The raw cover is introduced into a mold. The outer surface of the raw cover contacts the cavity surface of the mold. The inner surface of the raw cover contacts a bladder or a core. The raw cover is pressurized and heated in the mold, so that the rubber compositions in the raw cover flow. The heating causes a rubber crosslinking reaction to give the tire 2. The tire 2 is provided with a projection and recess pattern by using a mold having the projection and recess pattern on the cavity surface.

The tire 2 may be, for example, a pneumatic tire or a non-pneumatic tire, preferably a pneumatic tire. For example, the tire 2 is suitable for use as a summer tire or a winter tire (e.g., a studless winter tire, snow tire, cold weather tire, or studded tire). The tire may be used as a tire for passenger vehicles, large passenger vehicles, large SUVs, heavy duty vehicles such as trucks and buses, light trucks, or motorcycles, or as a racing tire (high performance tire), for example.

## EXAMPLES

The present disclosure will be specifically described with reference to, but not limited to, examples.

The chemicals used in the examples and comparative examples are listed below.

NR: TSR20

SBR 1: the product of Production Example 1 below (styrene content: 25% by mass, vinyl content: 25% by mass)

SBR 2: Europrene SOL R C2525 (styrene content: 25% by mass, vinyl content: 25% by mass) available from Versalis
SBR 3: HPR850 (styrene content: 26% by mass, vinyl bond content: 59% by mass) available from JSR Corporation
BR: BR150B (cis content: 97% by mass) available from Ube Industries, Ltd.
Carbon black: N220 ($N_2SA$: 114 $m^2/g$) available from Cabot Japan K.K.
Silica: Ultrasil VN3 ($N_2SA$: 175 $m^2/g$) available from Evonik Degussa
Silane coupling agent 1: NXT (3-octanoylthiopropyltriethoxysilane) available from Momentive
Silane coupling agent 2: NXT-Z45 (a copolymer of linking units A and B (linking unit A: 55 mol%, linking unit B: 45 mol%)) available from Momentive
Solid resin: SYLVARES SA85 (a copolymer of α-methylstyrene and styrene, softening point: 85°C) available from Arizona Chemical
Functionalized resin: the product of Production Example 2 below
Zinc oxide: zinc oxide #2 available from Mitsui Mining & Smelting Co., Ltd.
Antioxidant 6C: NOCRAC 6C (N-phenyl-N'-(1,3-dimethylbutyl)-p-phenylenediamine) available from Ouchi Shinko Chemical Industrial Co., Ltd.
Antioxidant FR: Antigene FR (a purified reaction product of amine and ketone with no amine residue, quinoline antioxidant) available from Sumitomo Chemical Co., Ltd.
Stearic acid: TSUBAKI available from NOF Corporation
Wax: Ozoace 0355 available from Nippon Seiro Co., Ltd.
Sulfur: powdered sulfur available from Tsurumi Chemical Industry Co., Ltd.
Vulcanization accelerator 1: NOCCELER D (N,N'-diphenylguanidine, DPG) available from Ouchi Shinko Chemical Industrial Co., Ltd.
Vulcanization accelerator 2: NOCCELER CZ (N-cyclohexyl-2-benzothiazolylsulfenamide) available from Ouchi Shinko Chemical Industrial Co., Ltd.

(Production Example 1)

A nitrogen-purged autoclave reactor was charged with cyclohexane, tetrahydrofuran, styrene, and 1,3-butadiene. After the temperature of the contents of the reactor was adjusted to 20°C, n-butyllithium was added to initiate polymerization. The polymerization was carried out under adiabatic conditions, and the maximum temperature reached 85°C. Once the polymerization conversion ratio reached 99%, 1,3-butadiene was further added, followed by polymerization for five minutes. Subsequently, N,N-bis(trimethylsilyl)-3-aminopropyltriethoxysilane was added as a modifier to cause a reaction. After completion of the polymerization reaction, 2,6-di-tert-butyl-p-cresol was added. Then, the solvent was removed by steam stripping, and the product was dried on hot rolls adjusted at 110°C to obtain SBR 1.

(Production Example 2: Synthesis of end-capped silane-containing resin by phenol functionalization)

An end-capped silane-containing resin was synthesized by phenol functionalization according to the process shown in Fig. 3 as described below.

Step A: Synthesis of end-capped COOH-functionalized resin by phenol group functionalization

A 2 L three-necked round bottom flask equipped with a mechanical stirrer and a reflux condenser was charged with 100.6 g of a 10.8 mol% phenol-functionalized resin (902 mmol containing 97.2 mmol of phenol units) and 1.50 L of acetone. Once the resin was completely dissolved by stirring, 10.55 g of potassium iodide, 6.48 g of sodium hydroxide, and 101.1 g of sodium chloroacetate were added. The reaction solution was heated to 57°C for 18 hours. The solvent was removed, and the product was dissolved in 3 L of dichloromethane (DCM) and washed with 1.2 L of 1M HCl aqueous solution. This two phase solution was stirred until all solids were completely dissolved. The aqueous phase was discarded. The resulting solution was washed with a 1M HCl aqueous solution, a 1M NaOH aqueous solution, and then a 1M HCl aqueous solution. This procedure was repeated, and washing with a 1M HCl aqueous solution was further performed four times as necessary. The organic phase was dried over anhydrous $MgSO_4$. The $MgSO_4$ was removed by gravity filtration on filter paper. The solvent was removed, and the product was dried under a reduced pressure at room temperature overnight. The resulting product weighed 103.8 g (98% of the theoretical yield).

Step B: Synthesis of end-capped silane-functionalized resin by COOH group functionalization

A 3 L three-necked round bottom flask equipped with a thermometer and a stir bar was charged with 106.0 g of the 10.8 mol% carboxylic acid-containing resin (900 mmol containing 97.0 mmol of carboxylic units) and 2.70 L of DCM. The solution was placed under a $N_2$ blanket and magnetically stirred. Once the resin was completely dissolved,

the flask was cooled with an ice/NaCl/water bath. Once the temperature reached 2.5 ± 2.5°C, 10.75 g of ethyl chloroformate (99.1 mmol) and then 9.97 g of TEA (98.5 mmol) were added. The activation time (formation of mixed anhydrides) was 32 minutes at 5 ± 3°C. Then, 21.58 g of 3-aminopropyltriethoxysilane (97.5 mmol) was charged. The cooling bath was removed, and the reaction system was warmed to room temperature. The reaction was continued at room temperature for 25 hours. The insoluble material (triethylamine hydrochloride) was removed by gravity filtration on Whatman® #1 filter paper. Next, 300 mL of hexane was added. The mixture was stirred for 30 minutes and stored in a refrigerator for 48 hours. The resulting two-phase system was warmed to room temperature. The top layer of hexane was isolated, and the solvent was removed. The product was dried under a reduced pressure at room temperature for two to three days. Dry ethanol was used to accelerate the removal of hexane. The resulting waxy product weighed approximately 80 g (63 to 64% of the theoretical yield). Another finishing step was to remove all solvent under a reduced pressure after completion of the reaction and dissolve the product in diethyl ether or methyl tert-butyl ether (MTBE). Subsequently, the solution was filtered on filter paper to remove a triethylamine hydrochloride byproduct, and then the solvent was slowly evaporated. The resulting product was dried under a reduced pressure at room temperature. Thus, an end-capped silane-containing resin was obtained by phenol functionalization.

(Examples and Comparative Examples)

According to each formulation shown in Table 1, the materials other than the sulfur and vulcanization accelerators were kneaded for five minutes at 150°C using a 1.7 L Banbury mixer (Kobe Steel, Ltd.) to give a kneaded mixture. Next, the sulfur and vulcanization accelerators were added to the kneaded mixture, and they were kneaded for five minutes at 80°C using an open roll mill to obtain an unvulcanized rubber composition. The unvulcanized rubber composition was formed into the shape of a tread and assembled with other tire components to build an unvulcanized tire. The unvulcanized tire was press-vulcanized at 150°C for 12 minutes to prepare a test tire having the specification shown in Table 1. The detailed specifications of the test tires having the tire outer diameters indicated in Table 1 are as follows:

(1) 245/45R16, outer diameter: 627 mm;
(2) 245/45R17, outer diameter: 652 mm;
(3) 245/55R16, outer diameter: 676 mm.

The prepared test tires of the different sizes were subjected to physical property measurements and evaluation in accordance with each specification shown in the table as described below. The results are shown in the table. It should be noted that Comparative Example 1 is used as a standard of comparison in Table 1.

<Viscoelastic test>

A viscoelastic measurement sample having a size of 20 mm in length × 4 mm in width × 1 mm in thickness was collected from inside of the rubber layer of the tread of each test tire in such a manner that the longer side of the sample was in the tire circumferential direction. The loss tangent, tan δ, of the rubber layer of each tire was measured using EPLEXOR series available from GABO under conditions including a temperature of 0°C, an initial strain of 5%, a dynamic strain of 1%, a frequency of 10 Hz, and an extension mode. Here, the thickness direction of the sample was in the tire radial direction.

<Acetone extractable content (AE content)>

The amount of substances extracted with acetone from a rubber specimen cut out of the tread of each test tire was measured by a method of measuring the acetone extractable content in accordance with JIS K 6229. Acetone extractable content (% by mass) = (Mass of sample before extraction - Mass of sample after extraction)/Mass of sample before extraction × 100

<Density>

A rubber specimen cut out of the tread of each test tire was measured for the mass in ethanol and the mass in air, and the density of the rubber specimen was calculated from the masses.

<Wet grip performance during high-speed running>

The test tires were mounted on a front-engine, rear-wheel-drive car of 2000 cc displacement made in Japan. The car was driven on a wet asphalt surface for 10 laps around a test track (high-speed running: average speed of 100

km/h). Then, the braking distance from an initial speed of 100 km/h was measured and expressed as an index (index of wet grip performance during high-speed running) relative to that of the standard comparative example taken as 100. A higher index indicates better wet grip performance during high-speed running.

[Table 1]

| | | Example | | | | | | | | | | | | | | Comparative Example | | | | | | | | |
|---|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 1 | 2 | 3 | 4 | 5 | 6 | 7 | 8 | 9 |
| Formulation (parts by mass) | NR | 35 | 35 | 35 | 35 | 15 | 35 | 35 | 35 | 35 | 35 | 35 | 35 | 35 | 35 | 35 | 35 | 35 | 35 | 35 | 35 | 35 | 35 | 15 |
| | SBR 1 | | 30 | 30 | 30 | 30 | 30 | 30 | 30 | 30 | 30 | 30 | 30 | 30 | 30 | | | | | | 40 | 40 | 40 | 40 |
| | SBR 2 | 40 | 10 | 10 | 10 | 30 | 15 | 20 | 10 | 10 | 10 | 10 | 10 | 10 | 10 | | | 40 | 40 | 40 | | | | |
| | SBR 3 | 10 | 10 | 10 | 10 | 10 | 5 | | 10 | 10 | 10 | 10 | 10 | 10 | 10 | 50 | | 10 | 10 | 10 | 10 | 10 | 10 | 10 |
| | BR | 15 | 15 | 15 | 15 | 15 | 15 | 15 | 15 | 15 | 15 | 15 | 15 | 15 | 15 | 15 | 65 | 15 | 15 | 15 | 15 | 15 | 15 | 15 |
| | Carbon black | 5 | 5 | 5 | 5 | 5 | 5 | 5 | 5 | 5 | 5 | 5 | 5 | 5 | 5 | 5 | 5 | 5 | 5 | 5 | 5 | 5 | 5 | 5 |
| | Silica | 100 | 100 | 80 | 80 | 80 | 100 | 100 | 75 | 100 | 100 | 100 | 100 | 100 | 100 | 100 | 100 | 100 | 100 | 100 | 100 | 80 | 80 | 80 |
| | Silane coupling agent 1 | 8.0 | 8.0 | 6.8 | | | 8.0 | 8.0 | 6.5 | 8.0 | 8.0 | 8.0 | 8.0 | 8.0 | 8.0 | 8.0 | 8.0 | 8.0 | 8.0 | 8.0 | 8.0 | 6.8 | | |
| | Silane coupling agent 2 | | | | 6.8 | 6.8 | | | | | | | | | | | | | | | | | 6.8 | 6.8 |
| | Solid resin | 7.5 | | | | | | | | | | | | | | 7.5 | 7.5 | 7.5 | 7.5 | 7.5 | 10.0 | 10.0 | 10.0 | 10.0 |
| | Functionalized resin | | 20.0 | 20.0 | 20.0 | 20.0 | 20.0 | 20.0 | 20.0 | 20.0 | 20.0 | 20.0 | 20.0 | 20.0 | 20.0 | | | | | | 10.0 | 10.0 | 10.0 | 10.0 |
| | Zinc oxide | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Antioxidant 6C | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Antioxidant FR | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| | Stearic acid | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Wax | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Sulfur | 1.3 | 1.3 | 1.3 | 1.3 | 1.3 | 1.3 | 1.3 | 1.3 | 1.3 | 1.3 | 1.3 | 1.3 | 1.3 | 1.3 | 1.3 | 1.3 | 1.3 | 1.3 | 1.3 | 1.3 | 1.3 | 1.3 | 1.3 |
| | Vulcanization accelerator 1 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Vulcanization accelerator 2 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| Isoprene-based rubbers + BR + SBR having low styrene content and low vinyl content (% by mass) | | 90 | 90 | 90 | 90 | 90 | 95 | 100 | 90 | 90 | 90 | 90 | 90 | 90 | 90 | 50 | 100 | 90 | 90 | 90 | 90 | 90 | 90 | 70 |
| Isoprene-based rubbers/ (BR + SBR having low styrene content and low vinyl content) | | 0.64 | 0.64 | 0.64 | 0.64 | 0.20 | 0.58 | 0.54 | 0.64 | 0.64 | 0.64 | 0.64 | 0.64 | 0.64 | 0.64 | 2.33 | 0.54 | 0.64 | 0.64 | 0.64 | 0.64 | 0.64 | 0.64 | 0.27 |
| Physical properties, Evaluation | tan δ at 0°C | 0.50 | 0.60 | 0.60 | 0.70 | 0.80 | 0.60 | 0.60 | 0.60 | 0.60 | 0.60 | 0.60 | 0.60 | 0.60 | 0.60 | 0.50 | 0.30 | 0.50 | 0.50 | 0.50 | 0.60 | 0.60 | 0.70 | 0.70 |
| | Acetone extractable content (% by mass) | 9.5 | 9.5 | 9.5 | 9.5 | 9.5 | 9.5 | 9.5 | 9.5 | 9.5 | 9.5 | 9.5 | 9.5 | 9.5 | 9.5 | 9.5 | 9.5 | 9.5 | 9.5 | 9.5 | 17.0 | 17.0 | 17.0 | 17.0 |
| | Density ($g/cm^3$) | 1.22 | 1.22 | 1.22 | 1.22 | 1.22 | 1.22 | 1.22 | 1.22 | 1.15 | 1.10 | 1.22 | 1.22 | 1.22 | 1.22 | 1.22 | 1.22 | 1.35 | 1.22 | 1.22 | 1.22 | 1.22 | 1.22 | 1.22 |
| | Maximum tread thickness (mm) | 8.0 | 8.0 | 8.0 | 8.0 | 8.0 | 8.0 | 8.0 | 8.0 | 8.0 | 8.0 | 8.5 | 7.5 | 8.0 | 8.0 | 8.0 | 8.0 | 8.0 | 8.0 | 12.0 | 8.0 | 8.0 | 8.0 | 8.0 |
| | Tire outer diameter (mm) | 627 | 627 | 627 | 627 | 627 | 627 | 627 | 627 | 627 | 627 | 627 | 627 | 652 | 676 | 625 | 625 | 625 | 727 | 625 | 625 | 625 | 625 | 625 |
| | Acetone extractable content × Maximum tread thickness | 76 | 76 | 76 | 76 | 76 | 76 | 76 | 76 | 76 | 76 | 81 | 71 | 76 | 76 | 76 | 76 | 76 | 76 | 114 | 136 | 136 | 136 | 136 |
| | Acetone extractable content × Tire outer diameter | 5957 | 5957 | 5957 | 5957 | 5957 | 5957 | 5957 | 5957 | 5957 | 5957 | 5957 | 5957 | 6194 | 6422 | 5938 | 5938 | 5938 | 6907 | 5938 | 10625 | 10625 | 10625 | 10625 |
| | (tan δ at 0°C/Maximum tread thickness) × 1000 | 62.5 | 75.0 | 75.0 | 87.5 | 100.0 | 75.0 | 75.0 | 75.0 | 75.0 | 75.0 | 70.6 | 80.0 | 75.0 | 75.0 | 62.5 | 37.5 | 62.5 | 62.5 | 41.7 | 75.0 | 75.0 | 87.5 | 87.5 |
| | (tan δ at 0°C/Tire outer diameter) × 1000 | 0.80 | 0.96 | 0.96 | 1.12 | 1.28 | 0.96 | 0.96 | 0.96 | 0.96 | 0.96 | 0.96 | 0.96 | 0.92 | 0.89 | 0.80 | 0.48 | 0.80 | 0.69 | 0.80 | 0.96 | 0.96 | 1.12 | 1.12 |
| | Wet grip performance during high-speed running | 110 | 120 | 125 | 130 | 135 | 125 | 130 | 130 | 130 | 125 | 115 | 125 | 115 | 110 | 100 | 80 | 95 | 95 | 95 | 85 | 90 | 95 | 95 |

Excellent wet grip performance during high-speed running was exhibited by the tires of the examples including a tread which contained one or more rubber components having a predetermined combined content of isoprene-based rubbers, BR, and SBR having a low styrene content and a low vinyl content, and silica, and which had a predetermined tan δ at 0°C, a predetermined acetone extractable content, and a predetermined density, wherein the tires further had a predetermined maximum tread thickness and a predetermined tire outer diameter.
Exemplary embodiments of the present disclosure include:

Embodiment 1. A tire, including a tread, the tread having a layer of a rubber composition containing: one or more rubber components having a combined content of isoprene-based rubbers, polybutadiene rubbers, and styrene-butadiene rubbers having a styrene content of 30% by mass or lower and a vinyl content of 30% by mass or lower of 90% by mass or more; and silica, the layer having a tan δ at 0°C of 0.50 or more, an acetone extractable content of 10.0% by mass or lower, and a density of 1.30 g/cm$^3$ or less, the tire having a maximum tread thickness of 10.0 mm or less and a tire outer diameter of 700 mm or less.
Embodiment 2. The tire according to Embodiment 1,
wherein the tread contains a functionalized resin and/or a modified diene rubber having a functional group capable of reacting with silica.
Embodiment 3. The tire according to Embodiment 1 or 2,
wherein the tread has a silica content of 80 parts by mass or less per 100 parts by mass of the rubber components.
Embodiment 4. The tire according to any one of Embodiments 1 to 3,
wherein the tread contains a mercapto silane coupling agent.
Embodiment 5. The tire according to any one of Embodiments 1 to 4,
wherein the tread satisfies the following relationship with respect to amounts of the isoprene-based rubbers, the polybutadiene rubbers, and the styrene-butadiene rubbers each based on 100% by mass of the rubber components:

$$[\text{Amount of isoprene-based rubbers}/(\text{Amount of polybutadiene rubbers} + \text{Amount of styrene-butadiene rubbers})] \leq 0.50.$$

Embodiment 6. The tire according to any one of Embodiments 1 to 5,
wherein the tread contains the isoprene-based rubber, the polybutadiene rubber, and the styrene-butadiene rubber.
Embodiment 7. The tire according to any one of Embodiments 2 to 6,
wherein the functionalized resin contains a functionalized resin having a functional group containing at least one element selected from the group consisting of oxygen, silicon, and nitrogen.
Embodiment 8. The tire according to any one of Embodiments 1 to 7,
wherein the acetone extractable content and the maximum tread thickness satisfy the following relationship: Acetone extractable content × Maximum tread thickness < 80.
Embodiment 9. The tire according to any one of Embodiments 1 to 8,
wherein the acetone extractable content and the tire outer diameter satisfy the following relationship: Acetone extractable content × Tire outer diameter < 6500.
Embodiment 10. The tire according to any one of Embodiments 1 to 9,
wherein the tan δ at 0°C and the maximum tread thickness satisfy the following relationship:

$$(\tan\delta \text{ at } 0°\text{C}/\text{Maximum tread thickness}) \times 1000 > 60.0.$$

Embodiment 11. The tire according to any one of Embodiments 1 to 10,
wherein the tan δ at 0°C and the tire outer diameter satisfy the following relationship:

$$(\tan\delta \text{ at } 0°\text{C}/\text{Tire outer diameter}) \times 1000 > 0.70.$$

REFERENCE SIGNS LIST

2 pneumatic tire
4 tread
6 sidewall

8 wing
10 clinch
12 bead
14 carcass
16 belt
18 band
20 innerliner
22 chafer
24 tread surface
26 groove
28 base layer
30 cap layer
32 core
34 apex
36 carcass ply
36a main portion
36b folded portion
38 interior layer
40 exterior layer
42 main groove
44 rib
CL equatorial plane of tire 2
P point on tread surface 24
T thickness of tread 4
D tire outer diameter

## Claims

**1.** A tire, comprising a tread,

the tread comprising a layer of a rubber composition comprising: one or more rubber components having a combined content of isoprene-based rubbers, polybutadiene rubbers, and styrene-butadiene rubbers having a styrene content of 30% by mass or lower and a vinyl content of 30% by mass or lower of 90% by mass or more; and silica,
the layer having a tan $\delta$ at 0°C of 0.50 or more, an acetone extractable content of 10.0% by mass or lower, and a density of 1.30 $g/cm^3$ or less,
the tire having a maximum tread thickness of 10.0 mm or less and a tire outer diameter of 700 mm or less.

**2.** The tire according to claim 1,
wherein the tread comprises a functionalized resin and/or a modified diene rubber having a functional group capable of reacting with silica.

**3.** The tire according to claim 1 or 2,
wherein the tread has a silica content of 80 parts by mass or less per 100 parts by mass of the rubber components.

**4.** The tire according to any one of claims 1 to 3,
wherein the tread comprises a mercapto silane coupling agent.

**5.** The tire according to any one of claims 1 to 4,
wherein the tread satisfies the following relationship with respect to amounts of the isoprene-based rubbers, the polybutadiene rubbers, and the styrene-butadiene rubbers each based on 100% by mass of the rubber components:

[Amount of isoprene-based rubbers/(Amount of polybutadiene rubbers + Amount of styrene-butadiene rubbers)] ≤ 0.50.

**6.** The tire according to any one of claims 1 to 5,

wherein the tread comprises the isoprene-based rubber, the polybutadiene rubber, and the styrene-butadiene rubber.

**7.** The tire according to any one of claims 2 to 6, wherein the functionalized resin comprises a functionalized resin having a functional group containing at least one element selected from the group consisting of oxygen, silicon, and nitrogen.

**8.** The tire according to any one of claims 1 to 7, wherein the acetone extractable content and the maximum tread thickness satisfy the following relationship:

$$\text{Acetone extractable content} \times \text{Maximum tread thickness} < 80.$$

**9.** The tire according to any one of claims 1 to 8, wherein the acetone extractable content and the tire outer diameter satisfy the following relationship:

$$\text{Acetone extractable content} \times \text{Tire outer diameter} < 6500.$$

**10.** The tire according to any one of claims 1 to 9, wherein the tan δ at 0°C and the maximum tread thickness satisfy the following relationship:

$$(\tan\delta \text{ at } 0^{\circ}\text{C}/\text{Maximum tread thickness}) \times 1000 > 60.0.$$

**11.** The tire according to any one of claims 1 to 10, wherein the tan δ at 0°C and the tire outer diameter satisfy the following relationship:

$$(\tan\delta \text{ at } 0^{\circ}\text{C}/\text{Tire outer diameter}) \times 1000 > 0.70.$$

FIG.1

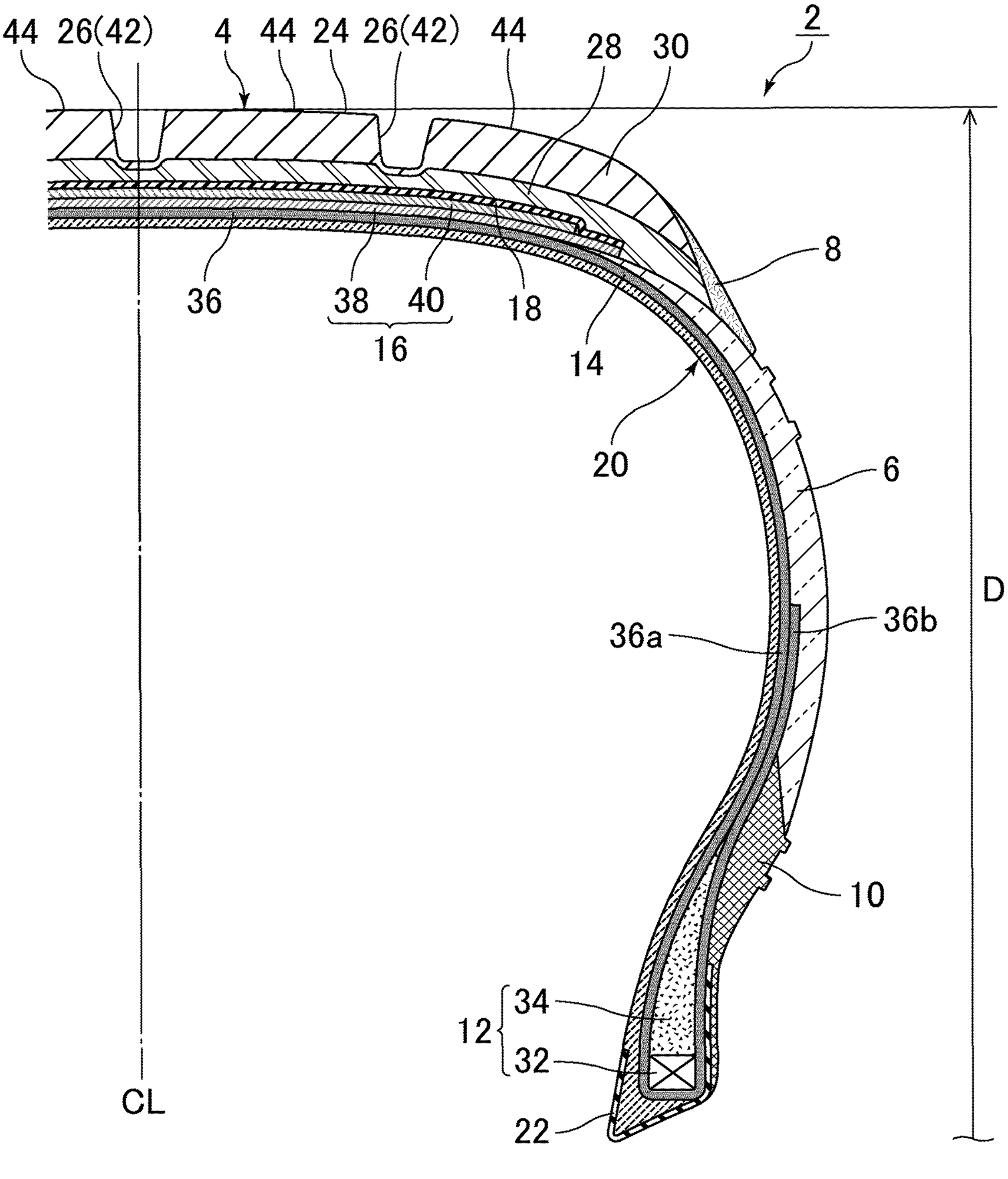
44
26(42)
4
44
24
26(42)
44
28
30
2
8
36
38
40
16
18
14
20
6
D
36a
36b
10
12
34
32
22
CL

# FIG.2

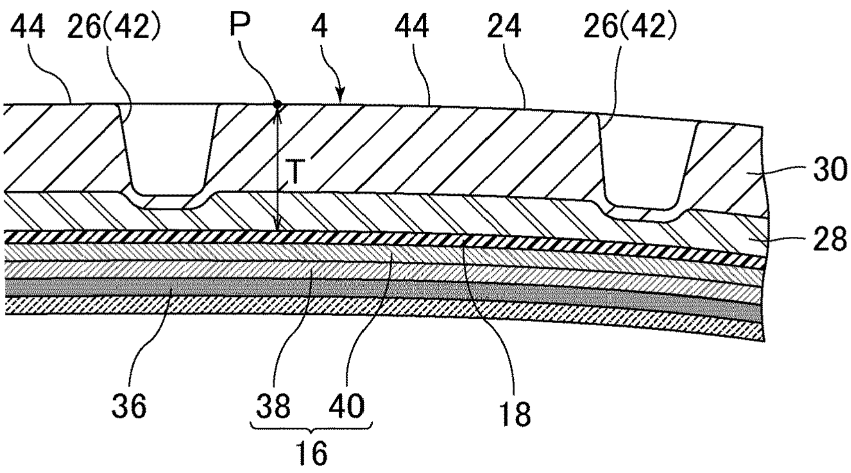
44
26(42)
P
4
44
24
26(42)
T
30
28
36
38
40
16
18

# FIG.3

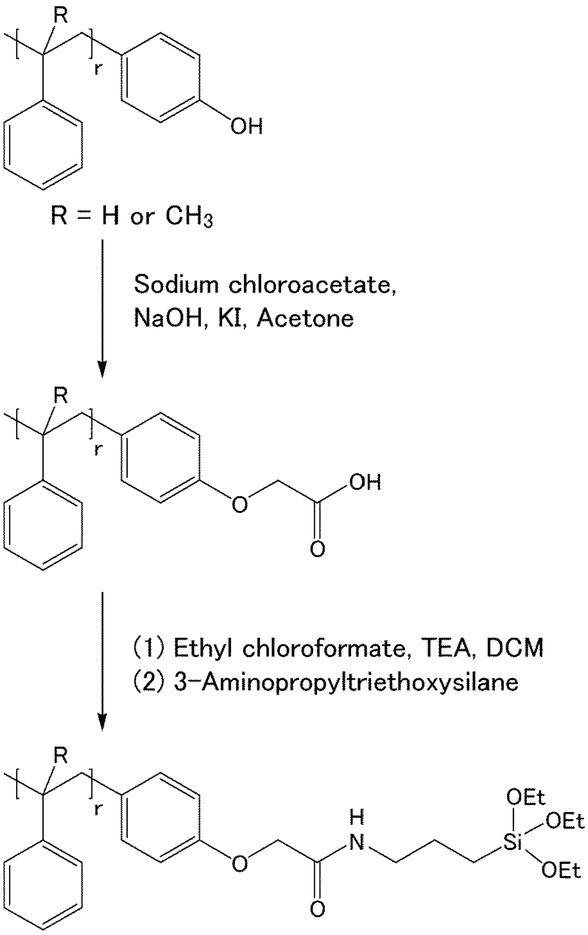
R = H or CH3
Sodium chloroacetate,
NaOH, KI, Acetone
(1) Ethyl chloroformate, TEA, DCM
(2) 3-Aminopropyltriethoxysilane

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020513060 T